# EUROPEAN PATENT APPLICATION

(11) **EP 4 152 765 A1**
(43) Date of publication of application: **22.03.2023**
(21) Application number: 22179394.6
(22) Date of filing: 16.06.2022
(51) Int. Cl.: H04R 1/10

(54) **A WIRELESSLY RECHARGEABLE HEARING DEVICE**

(30) Priority: 15.09.2021 DK PA202170453
(71) Applicant: GN Hearing A/S, 2750 Ballerup (DK)
(72) Inventor: DAVIDS, Søren, 2750 Ballerup (DK); LINDBERG, Christopher Wessel, 2750 Ballerup (DK); MICHAELSEN, Anders Hjermø, 2750 Ballerup (DK); NIELSEN, Henrik, 2750 Ballerup (DK); ÖZDEN, Sinasi, 2750 Ballerup (DK)
(74) Representative: GN Store Nord A/S

(57) **Abstract**

The present disclosure relates to a wirelessly rechargeable hearing device having inductive charging circuitry comprising a receiver coil, which has a plurality of receiver coil windings surrounding a winding-free area. The hearing device further comprises a magnetic component configured to magnetically engage with another magnetic component comprised outside the hearing device and the magnetic component is further arranged within a volume that extends perpendicularly from the winding-free area. Further, the disclosure relates to a charger for the wirelessly rechargeable hearing device, where the charger comprises a magnetic component arranged within a volume that extends perpendicularly from a winding-free area defined by transmitter coil windings. Lastly, a system comprising the wirelessly rechargeable hearing device and the charger is disclosed.

## Description

The present disclosure relates to a wirelessly rechargeable hearing device, and a charger for a wirelessly rechargeable hearing device.

### BACKGROUND OF THE INVENTION

A hearing device may be a hearable, an earphone, a hearing protection device, a hearing aid (e.g. an invisible-in-canal (IIC), completely-in-canal (CIC), in-the-canal (ITC), in-the-ear (ITE), receiver-in-ear (RIE), microphone-and-receiver-in-ear (MaRIE), behind-the-ear (BTE) hearing aid), an ear plug, or other hearing device. Such hearing devices contain a plurality of electronic components and circuits that create, process, and/or cancel audible sound for the potential benefit of the user. Some or all of the sound may be digitized and may be altered by one or more of the components and circuits, e.g. the sound may be amplified, filtered, moderated, equalized, adjusted, cancelled, etc.

The electronic components require power, which is supplied by a battery that may be rechargeable or non-rechargeable. If the battery is not rechargeable, the hearing device may have a battery door in the shell of the hearing device through which the battery can be removed and replaced. Having a battery door imposes design restrictions on the hearing device, which are especially significant for in-ear hearing devices, where there is little available space, making rechargeable batteries advantageous.

One option is wired recharging, wherein the battery is not replaced, but rather recharged by connecting the battery to an external charger via an electrical connection, e.g. via electrically conductive contact points.

Another option is wireless recharging, where the battery is recharged using inductive charging. A fluctuating magnetic field created by an alternating current in a transmitter (TX) coil comprised in the charger induces an alternating electric current in a receiver (RX) coil comprised in the hearing device. The alternating current induced in the receiver coil is rectified and used to charge the battery. Thus, by using wireless charging the hearing device does not need a battery door nor an electrical wired pathway between the battery and a charger.

The strength of the coupling between the receiver coil and the transmitter coil is in part dependent on how well the two induction coils are aligned and the distance between them. It is thus a technical problem with wirelessly rechargeable devices that the receiver and transmitter coils should be sufficiently aligned to achieve and to optimise the recharging of the hearing device.

The user is not aided in aligning the induction coils in the same way that the user is aided by the design of an electric wire and its corresponding plug(s), or by the design of the battery and the battery holder. Further, alignment between the induction coils becomes more difficult the smaller the hearing device is, and the smaller the induction coils are. Thus, the problem of achieving sufficient alignment of the induction coils is present in all wirelessly rechargeable hearing devices and can be particularly difficult for in-ear hearing devices, and especially for the in-ear hearing devices with the smallest form factors such as the CIC hearing aids. Aligning the RX coil of these devices with the TX coil is made more difficult by the fact that these devices are often custom made to fit a particular user's ear canal, this means that the positioning of the RX coil in the custom devices depends on the final shape of the device and is not standardized which in turn makes it troublesome to make standardized wireless chargers.

Therefore, it is an object to provide an improved wirelessly rechargeable hearing device.

It is a further object to provide a wirelessly rechargeable hearing device, which aids the user in placing the hearing device correctly in the charger such that recharging of the hearing device is possible and/or is optimised.

It is a further object to facilitate reproducible placement of the wirelessly rechargeable hearing devices in a charger.

It is further an object to provide an improved system for charging of a wirelessly rechargeable hearing device.

Further, it is desirable that the use of space available within the wirelessly rechargeable hearing device be optimised to limit design restrictions on hearing devices, which already struggle with having little available space.

### SUMMARY OF THE INVENTION

In a first aspect is provided a wirelessly rechargeable hearing device, in a second aspect is provided a charger for a wirelessly rechargeable hearing device, and in a third aspect is provided a system comprising a wirelessly rechargeable hearing device and a charger for the rechargeable hearing device. In the three aspects, the terms and features relate to the terms and features having the same name in the other aspects and therefore the descriptions and explanations of terms and features given in one aspect apply to the other aspects with appropriate modifications.

**In the first aspect**, the wirelessly rechargeable hearing device is configured to be worn at an ear of a user and the hearing device comprises: a hearing device housing, a rechargeable battery arranged within the hearing device housing, and inductive charging circuitry arranged within the hearing device housing. The inductive charging circuitry comprises a receiver coil configured for inductive coupling to a transmitter coil positioned outside the hearing device, where the receiver coil comprises a plurality of receiver coil windings surrounding a first winding-free area. The hearing device further comprises a first magnetic component, which is configured to magnetically engage with a second magnetic component positioned outside the hearing device. The first magnetic component is arranged within the hearing device housing, and the first magnetic component is further arranged within a first volume, where the first volume extends perpendicularly from the first winding-free area.

The hearing device will have one or more functionalities related to hearing, such as one or more functionalities, which act to shield the user's ear canal from certain sounds, or one or more functionalities to aid users with hearing loss. Thus, the hearing device may be a hearing aid. In some embodiments, the hearing device is an in-ear hearing device, such as a completely-in-the-canal hearing aid.

In some embodiments, a hearing device is configured to be worn by a user. The hearing device may be arranged at the user's ear, on the user's ear, over the user's ear, in the user's ear, in the user's ear canal, behind the user's ear and/or in the user's concha, i.e., the hearing device is configured to be worn in, on, over and/or at the user's ear. The user may wear two hearing devices, one hearing device at each ear. The two hearing devices may be connected, such as wirelessly connected and/or connected by wires, such as a binaural hearing aid system.

The hearing device may be a hearable such as a headset, headphone, earphone, earbud, hearing aid, a personal sound amplification product (PSAP), an over-the-counter (OTC) hearing device, a hearing protection device, a one-size-fits-all hearing device, a custom hearing device or another head-wearable hearing device. Hearing devices can include both prescription devices and non-prescription devices.

The hearing device may be embodied in various housing styles or form factors. Some of these form factors are Behind-the-Ear (BTE) hearing device, Receiver-in-Canal (RIC) hearing device, Receiver-in-Ear (RIE) hearing device or Microphone-and-Receiver-in-Ear (MaRIE) hearing device. These devices may comprise a BTE unit configured to be worn behind the ear of the user and an in the ear (ITE) unit configured to be inserted partly or fully into the user's ear canal. Generally, the BTE unit may comprise at least one input transducer, a power source and a processing unit. The term BTE hearing device refers to a hearing device where the receiver, i.e. the output transducer, is comprised in the BTE unit and sound is guided to the ITE unit via a sound tube connecting the BTE and ITE units, whereas the terms RIE, RIC and MaRIE hearing devices refer to hearing devices where the receiver may be comprise in the ITE unit, which is coupled to the BTE unit via a connector cable or wire configured for transferring electric signals between the BTE and ITE units.

Some of these form factors are In-the-Ear (ITE) hearing device, Completely-in-Canal (CIC) hearing device or Invisible-in-Canal (IIC) hearing device. These hearing devices may comprise an ITE unit, wherein the ITE unit may comprise at least one input transducer, a power source, a processing unit and an output transducer. These form factors may be custom devices, meaning that the ITE unit may comprise a housing having a shell made from a hard material, such as a hard polymer or metal, or a soft material such as a rubber-like polymer, molded to have an outer shape conforming to the shape of the specific user's ear canal.

Some of these form factors are earbuds, on the ear headphones or over the ear headphones. The person skilled in the art is well aware of different kinds of hearing devices and of different options for arranging the hearing device in, on, over and/or at the ear of the hearing device wearer. The hearing device (or pair of hearing devices) may be custom fitted, standard fitted, open fitted and/or occlusive fitted.

In some embodiments, the hearing device may comprise one or more input transducers. The one or more input transducers may comprise one or more microphones. The one or more input transducers may comprise one or more vibration sensors configured for detecting bone vibration. The one or more input transducer(s) may be configured for converting an acoustic signal into a first electric input signal. The first electric input signal may be an analogue signal. The first electric input signal may be a digital signal. The one or more input transducer(s) may be coupled to one or more analogue-to-digital converter(s) configured for converting the analogue first input signal into a digital first input signal.

In some embodiments, the hearing device may comprise one or more antenna(s) configured for wireless communication. The one or more antenna(s) may comprise an electric antenna. The electric antenna may be configured for wireless communication at a first frequency. The first frequency may be above 800 MHz, preferably a wavelength between 900 MHz and 6 GHz. The first frequency may be 902 MHz to 928 MHz. The first frequency may be 2.4 to 2.5 GHz. The first frequency may be 5.725 GHz to 5.875 GHz. The one or more antenna(s) may comprise a magnetic antenna. The magnetic antenna may comprise a magnetic core. The magnetic antenna may comprise a coil. The coil may be coiled around the magnetic core. The magnetic antenna may be configured for wireless communication at a second frequency. The second frequency may be below 100 MHz. The second frequency may be between 9 MHz and 15 MHz.

In some embodiments, the hearing device may comprise one or more wireless communication unit(s). The one or more wireless communication unit(s) may comprise one or more wireless receiver(s), one or more wireless transmitter(s), one or more transmitter-receiver pair(s) and/or one or more transceiver(s). At least one of the one or more wireless communication unit(s) may be coupled to the one or more antenna(s). The wireless communication unit may be configured for converting a wireless signal received by at least one of the one or more antenna(s) into a second electric input signal. The hearing device may be configured for wired/wireless audio communication, e.g. enabling the user to listen to media, such as music or radio and/or enabling the user to perform phone calls.

In an embodiment, the wireless signal may originate from one or more external source(s) and/or external devices, such as spouse microphone device(s), wireless audio transmitter(s), smart computer(s) and/or distributed microphone array(s) associated with a wireless transmitter. The wireless input signal(s) may origin from another hearing device, e.g., as part of a binaural hearing system and/or from one or more accessory device(s), such as a smartphone and/or a smart watch.

In some embodiments, the hearing device may include a processing unit. The processing unit may be configured for processing the first and/or second electric input signal(s). The processing may comprise compensating for a hearing loss of the user, i.e., apply frequency dependent gain to input signals in accordance with the user's frequency dependent hearing impairment. The processing may comprise performing feedback cancelation, beamforming, tinnitus reduction/masking, noise reduction, noise cancellation, speech recognition, bass adjustment, treble adjustment and/or processing of user input. The processing unit may be a processor, an integrated circuit, an application, functional module, etc. The processing unit may be implemented in a signal-processing chip or a printed circuit board (PCB). The processing unit may be configured to provide a first electric output signal based on the processing of the first and/or second electric input signal(s). The processing unit may be configured to provide a second electric output signal. The second electric output signal may be based on the processing of the first and/or second electric input signal(s).

In some embodiments, the hearing device may comprise an output transducer. The output transducer may be coupled to the processing unit. The output transducer may be a receiver. It is noted that in this context, a receiver may be a loudspeaker, whereas a wireless receiver may be a device configured for processing a wireless signal. The receiver may be configured for converting the first electric output signal into an acoustic output signal. The output transducer may be coupled to the processing unit via the magnetic antenna. The output transducer may be comprised in an ITE unit or in an earpiece, e.g. Receiver-in-Ear (RIE) unit or Microphone-and-Receiver-in-Ear (MaRIE) unit, of the hearing device. One or more of the input transducer(s) may be comprised in an ITE unit or in an earpiece.

In some embodiments, the wireless communication unit may be configured for converting the second electric output signal into a wireless output signal. The wireless output signal may comprise synchronization data. The wireless communication unit may be configured for transmitting the wireless output signal via at least one of the one or more antennas.

In some embodiments, the hearing device may comprise a digital-to-analogue converter configured to convert the first electric output signal, the second electric output signal and/or the wireless output signal into an analogue signal.

In some embodiments, the hearing device may comprise a vent. A vent is a physical passageway such as a canal or tube primarily placed to offer pressure equalization across a housing placed in the ear such as an ITE hearing device, an ITE unit of a BTE hearing device, a CIC hearing device, a RIE hearing device, a RIC hearing device, a MaRIE hearing device or a dome tip/earmold. The vent may be a pressure vent with a small cross section area, which is preferably acoustically sealed. The vent may be an acoustic vent configured for occlusion cancellation. The vent may be an active vent enabling opening or closing of the vent during use of the hearing device. The active vent may comprise a valve.

The battery may be a replaceable battery. The power source may comprise a power management unit. The power management unit may be configured to convert the first voltage into a second voltage. The receiver coil may be provided by the magnetic antenna.

In some embodiments, the hearing device may comprise a memory, including volatile and nonvolatile forms of memory.

The hearing device housing is a housing comprising at least the rechargeable battery, the inductive charging circuitry, and the first magnetic component. The housing may be a shell made from a hard material, such as a hard polymer or metal, or a soft material such as a rubber-like polymer, and may be moulded to have an outer shape conforming to the shape of the specific user's ear canal.

Inductive charging circuitry is circuitry configured for charging a rechargeable battery wirelessly using magnetic induction. The inductive charging circuitry comprised in the hearing device comprises a receiver coil, also referred to as an Rx coil. The receiver coil may be any suitable shape or type of induction coil. In some embodiments, the inductive charging circuitry is further configured according to a standard of wireless power transfer, such as the Near Field Communications (NFC) standard or the Qi standard. Advantageously, the inductive charging circuitry may be configured according to the Near Field Communications (NFC) standard.

In some embodiments, the inductive charging circuitry is configured to the 140 kHz Qi standard and allow frequency adaptation (such as 80 - 300 kHz or 110 - 205 kHz (low power Qi charging)) for maximum resonant power transfer during charging. In some embodiments, the inductive charging circuitry is configured to use the 13.56 MHz NFC standard. In some embodiments, the inductive charging circuitry is configured to use a frequency in the range of 1 - 25 MHz, such as 5 - 20 MHz, such as a frequency around 6.78 MHz. In some embodiments, the inductive charging circuitry is configured to use a frequency in the range of 90 - 350 kHz, such as 131 kHz or 333 kHz, as main frequency.

The receiver coil is configured for inductive coupling to a transmitter coil positioned outside the hearing device, such as in a charger. A transmitter coil is also known as a Tx coil. A receiver or transmitter coil may be characterized by an axial centreline, also referred to as the axial line, of the coil, which extends through the centre of the coil and along its magnetic axis. The plurality of receiver coil windings may extend in a direction which is substantially perpendicular to the axial line, as would be the case for a coil having a spiral or helical shape. For inductive charging, a receiver coil and a transmitter coil must couple, such that a fluctuating, i.e. time-varying, magnetic field created by the transmitter coil will result in an alternating electric current in the receiver coil. The strength of this coupling is in part dependent on how well the coil axial centrelines of the receiver and transmitter coils are coaxially aligned and the distance between the two induction coils, such as the distance between the centres of mass of the two induction coils.

The receiver coil has receiver coil windings, which surround an inner, central area, which has no windings. Thus, the inner area is a winding-free area, and the receiver coil windings surround a first winding-free area. The shape of the winding-free area as outlined by the receiver coil windings may be any shape of a suitable coil winding such as e.g. oval, rectangular, or a regular polygonal shape.

The receiver coil in a wirelessly rechargeable hearing device and/or the transmitter coil in a charger for the wirelessly chargeable hearing device may be a flat, i.e. planar, induction coil. The flat induction coil may have windings in less than five layers, such as less than three, such as in a single layer. Each layer may have multiple windings, i.e. an inner winding running along the periphery of the first winding-free area and one or more subsequent windings extending around the inner winding, e.g. in a planar spiral shape.

The hearing device further comprises a first magnetic component configured to magnetically engage with a second magnetic component positioned outside the hearing device. The first magnetic component may thus be configured to facilitate inductive coupling between the receiver coil of the hearing device and the transmitter coil in a charger. For example, the first magnetic component may be configured to magnetically engage with a second magnetic component comprised in a charger in such a way as to facilitate inductive coupling between the receiver coil and the transmitter coil.

The first magnetic component, which is configured to magnetically engage with a second magnetic component, aids the user in reproducible and efficient placement of the hearing device. For example, reproducible and efficient placement of the hearing device at or in the charger. An advantage of using magnetic coupling for correct, reproducible placement of a hearing device in a charger is that the design restrictions on the charger are diminished, which reduces the complexity and cost of the charger. The reproducible placement does not mean that the placement has to be exactly the same every time, but that it is close enough to an optimal placement for inductive charging. Thus, a charger for the wirelessly chargeable hearing device does not need to have a shape that follows an outline of the hearing device, such as an outline of at least part of the hearing device housing, in order for the hearing device to be placed at a charging position at or in the charger. Further, a charger for the hearing device does not need to have a lid in order to secure the hearing device in place nor does it require a lid in which the transmitter coil is comprised as a way to align the induction coils as is the case for many chargers in use.

In some embodiments, the first magnetic component is a magnetic material, or a magnet. The magnetic material may be a metal, such as stainless steel. The magnet may be a permanent magnet, such as a permanent magnet that is ferromagnetic or ferrimagnetic, or such as a material having a weaker type of magnetism, or a temporary magnet, such as an electromagnet.

In some embodiments, the first magnetic component has one or more structures within it, such as e.g. one or more divots, through-holes, channels, etc., which are designed to reduce formation and/or size of eddy currents within the first magnetic component.

In some embodiments, the first magnetic component is flat, i.e. has a dimension that is much smaller than the two other dimensions. For example, the first magnetic component may be a disc, such as a round or oval disc, or a plate, such as a rectangular plate.

The first magnetic component is positioned within the hearing device in such a way that it can magnetically engage with a second magnetic component comprised outside the hearing device, such as in a charger, in such a way as to facilitate inductive coupling between the receiver coil in the hearing device and a transmitter coil in the charger. By "engage" is meant that a magnetic component interacts magnetically with another magnetic component, i.e. there is a magnetic force between the two such that they either attract or repel each other. In some embodiments, the first magnetic component is configured such that it will attract and/or be attracted to the second magnetic component. The first and second magnetic components may be configured such that they will attract each other in some orientations of the hearing device in the charger and repel each other in other orientations of the hearing device in the charger.

The magnetic engagement between the first magnetic component and the second magnetic component acts to facilitate correct positioning of the induction coils, thereby aligning the coils so that the induction coils can couple inductively.

The inductive coupling direction is the primary direction, the optimal direction, of inductive coupling for the induction coil and will follow the axial centreline of the induction coil. Ideally, the receiver and transmitter coils are coaxially aligned such that the axial centrelines of the receiver coil and transmitter coil are parallel and aligned. However, a perfect coaxial alignment of the two induction coils is not necessary for inductive coupling and some deviation from the ideal is permissible, although too much deviation will result in poor or no charging. The inductive coupling direction of an induction coil points in the direction towards the other induction coil, which the first mentioned induction coil is configured to couple with. Thus, the inductive coupling direction of a planar induction coil will usually be a normal to the plane of the induction coil windings.

The magnetic coupling direction is the primary direction of the magnetic force between the magnetic components, i.e. direction in which the resultant magnetic force is strongest.

The first magnetic component is configured to magnetically engage with a second magnetic component comprised in the charger in such a way that, when the first and second magnetic components engage appropriately, the receiver coil can inductively couple to the transmitter coil. The hearing device may further comprise one or more indicators such as one or more visual indicators, such as one or more icons and/or one or more coloured surfaces to further aid the user in correct placement of the wirelessly rechargeable hearing device in the associated charger. Likewise, the associated charger may comprise one or more indicators such as one or more visual indicators, such as icons and/or one or more coloured surfaces to further aid the user in correct placement of the wirelessly rechargeable hearing device in the associated charger. Alternatively, or additionally, the one or more indicators may be textual, or shapes that fit together.

The wirelessly rechargeable hearing device may further comprise yet another magnetic component, a third magnetic component. Likewise, the associated charger may further comprise another magnetic component, a fourth magnetic component. The third magnetic component may be configured to magnetically engage with the second magnetic component comprised in the charger, and/or with the fourth magnetic component comprised in the charger.

A first volume extends perpendicularly from the first winding-free area and the first magnetic component is arranged within the first volume. The first volume may thus extend both in front of and behind the receiver coil with respect to the inductive coupling direction of the receiver coil. The first volume is a virtual volume, which may overlap with a physical volume such as a protrusion volume. By the magnetic component being arranged within a volume is meant that the magnetic component is positioned entirely or partly within the volume. The first magnetic component may be placed concentrically within the first volume, i.e. such that there is a common centre for the first magnetic component and the first winding-free area. The first magnetic component may thus be placed co-axially inside the volume defined by the windings of the receiver coil. The first magnetic component may be a magnet having a magnetic field that is at least partially uniform with respect to an axis extending perpendicularly from the centre of the first winding-free area.

In some embodiments of the wirelessly rechargeable hearing device, particularly in the smaller types of hearing devices, where space is limited, the first magnetic component may be placed adjacent to the rechargeable battery. In some embodiments, one or more dimensions of the first magnetic component has a defined diameter, e.g. the first magnetic component is circular, or elliptical. The receiver coil may be adhered directly onto the rechargeable battery and the distance is then mostly determined by the thickness of the adhesive, where the adhesive could be e.g. glue or tape. A receiver coil magnetic shielding, such as a ferrite disc or plate, or a frame structure materiel may be placed in-between the receiver coil and the rechargeable battery. In some embodiments, the distance between the receiver coil and an outer surface of the rechargeable battery is between 0.1 mm and 1 mm, such as 0.12 mm and 0.8 mm, such as 0.15 and 0.6 mm.

In some embodiments, the receiver coil is positioned adjacent to a side of the rechargeable battery, or the receiver coil is positioned adjacent to a terminal of the rechargeable battery, i.e. adjacent to the negative or positive terminal.

In some embodiments, the first magnetic component is configured to be able to engage magnetically with the second magnetic component in a direction that is at an angle of between -15 to 15 degrees, such as between -10 to 10 degrees, such as between -5 to 5 degrees, to the axial centreline of the receiver coil. That is, the magnetic coupling direction and the inductive coupling direction may be close to being at zero degree angle to each other.

In some embodiments, the first magnetic component is further arranged substantially in the same plane as the receiver coil. The plane of the receiver coil is a plane defined by the windings of the receiver coil. Being arranged substantially in the same plane as the receiver coil may mean that a centre, such as geometric centre or a mass centre, of the first magnetic component is arranged substantially in the same plane as the receiver coil.

In some embodiments, the first magnetic component may have a first surface and a second surface opposed to the first surface, wherein the first surface may be arranged facing the second magnetic component. In some embodiments, a distance from the first surface to the plane in which the first magnetic component is positioned is substantially the same as a distance from the second surface to that plane, where both distances are measured in a direction that is perpendicular to the plane. For example, if the first magnetic component is further arranged substantially in the same plane as the receiver coil, the distance from the first surface to the plane of the receiver coil may be substantially the same as a distance from the second surface to the plane of the receiver coil, where both distances are measured in a direction that is perpendicular to the plane of the receiver coil.

In some embodiments, the first magnetic component is further arranged substantially in a first plane that is substantially parallel to a receiver coil plane defined by the windings of the receiver coil, and where the first plane has a first distance to the receiver coil plane. The first distance may be 1 mm - 20 mm, such as 2 mm - 15 mm, such as 4 mm - 10 mm. The first distance may be a minimum distance between the first plane and the receiver coil plane defined by the windings of the receiver coil. The first distance may be substantially zero, i.e. the first plane and the receiver coil plane defined by the windings of the receiver coil may be substantially overlapping. In some embodiments, the minimum distance D1 between the first magnetic component and nearest winding of the receiver coil is in the range 0.5 mm - 5 mm, such as in the range 1 mm - 4 mm, such as 2 mm - 3 mm, i.e. the first magnetic component does not touch the windings of the receiver coil.

By the receiver coil plane being defined by the windings of the receiver coil is meant that the receiver coil plane intersects with some or all of the windings of the receiver coil. For example, the receiver coil may be a planer coil and the receiver coil plane is a plane that intersects the receiver coil windings.

In some embodiments, the first magnetic component is arranged at least partially or entirely in front of the receiver coil with respect to the inductive coupling direction of the receiver coil. Thus, the first magnetic component may be displaced with respect to the receiver coil so as to be positioned at least partially or entirely in front of the receiver coil in a direction parallel to the inductive coupling direction of the receiver coil.

In some embodiments, the hearing device housing comprises a protrusion extending from a part of the hearing device housing and defining a protrusion volume. In some embodiments, the first magnetic component is arranged at least partially within the protrusion volume. By the protrusion volume being defined by the protrusion extending from the hearing device housing is meant that the protrusion partially surrounds the protrusion volume.

In some embodiments, the receiver coil is arranged outside the protrusion volume. Thus, the receiver coil may be arranged within a part of the hearing device housing that is not part of the protrusion volume.

In some embodiments, a first magnetic component outer boundary, which is an outer boundary of the first magnetic component, is defined in a plane that is substantially parallel to a plane defined by the windings of the receiver coil, and a first winding-free area outer boundary, which is an outer boundary of the first winding-free area, is defined in a plane that is substantially parallel to a plane defined by the windings of the receiver coil. The plane defining the first magnetic component outer boundary may be the same plane as the plane defining the first winding-free area outer boundary, or it may be a different plane.

In some embodiments, a first winding-free area outer boundary is defined in a plane substantially parallel to a plane defined by the windings of the receiver coil, and the first winding-free area outer boundary may be substantially circular, oval, elliptical, or regular polygonal in shape.

In some embodiments, a first magnetic component outer boundary is defined in a plane substantially parallel to a plane defined by the windings of the receiver coil, and the first magnetic component outer boundary is of a shape, which is substantially circular, oval, rectangular, or regular polygonal.

In some embodiments, the first magnetic component outer boundary has a shape that is geometrically similar to that of the first winding-free area outer boundary. For example, the shape of the first magnetic component outer boundary and the shape of the first winding-free area outer boundary may both be substantially e.g. circular, oval, elliptical, or regular polygonal.

In some embodiments, the first magnetic component outer boundary is smaller than the outer boundary of the first winding-free area. In some embodiments, the first magnetic component outer boundary may be a scaled down version of substantially the same shape as that of the first winding-free area outer boundary.

**In the second aspect**, the charger for a wirelessly rechargeable hearing device comprises a charger casing and a transmitter coil arranged within the charger casing. The transmitter coil is configured for inductive coupling to a receiver coil positioned outside the charger. The transmitter coil comprises a plurality of transmitter coil windings surrounding a second winding-free area. The charger further comprises a second magnetic component configured to magnetically engage with a first magnetic component positioned outside the charger, and the second magnetic component is arranged within a second volume, which extends perpendicularly from the second winding-free area.

The transmitter coil has transmitter coil windings, which surround an inner, central area, which has no windings. Thus, the inner area is a winding-free area, and the transmitter coil windings surround a second winding-free area. The shape of the winding-free area as outlined by the transmitter coil windings may be any shape of a suitable coil winding such as e.g. oval, rectangular, or a regular polygonal shape.

In some embodiments, the second magnetic component is a magnetic material, or a magnet. The magnetic material may be a metal, such as stainless steel. The magnet may be a permanent magnet, such as a permanent magnet that is ferromagnetic or ferrimagnetic, or such as a material having a weaker type of magnetism, or it may be a temporary magnet, such as an electromagnet.

In some embodiments, the second magnetic component has one or more structures within it, such as e.g. one or more divots, through-holes, channels, etc., which are designed to reduce formation and/or size of eddy currents within the second magnetic component.

In some embodiments, the distance between the transmitter coil and an outer surface of the charger is between 0.1 mm and 1 mm, such as 0.12 mm and 0.8 mm, such as 0.15 and 0.6 mm.

In some embodiments, the second magnetic component is flat, i.e. has a dimension that is much smaller than the two other dimensions. For example, the second magnetic component may be a disc, such as a round or oval disc, or a plate, such as a rectangular plate.

The second magnetic component is positioned within the charger in such a way that it can magnetically engage with a first magnetic component comprised outside the charger, such as in a hearing device, in such a way as to facilitate inductive coupling between a receiver coil in the hearing device and the transmitter coil in the charger.

A second volume extends perpendicularly from the second winding-free area and the second magnetic component is arranged within the second volume. The second volume may thus extend both in front of and behind the transmitter coil with respect to the inductive coupling direction of the transmitter coil. The second volume is a virtual volume, which may overlap with a physical volume.

In some embodiments, the second magnetic component is further arranged substantially in the same plane as the transmitter coil. The plane of the transmitter coil may be a plane defined by the windings of the transmitter coil. Being arranged substantially in the same plane as the transmitter coil may mean that a centre, such as geometric centre or a mass centre, of the second magnetic component is arranged substantially in the same plane as the transmitter coil. In some embodiments, the second magnetic component has a first surface and a second surface opposed to the first surface, wherein the first surface may be arranged facing the first magnetic component. In some embodiments, a distance from the first surface to the plane of the transmitter coil is substantially the same as a distance from the second surface to the plane of the transmitter coil, where both distances are measured in a direction that is perpendicular to the plane of the transmitter coil.

In some embodiments, the second magnetic component is further arranged substantially in a second plane that is substantially parallel to a transmitter coil plane defined by the windings of the transmitter coil, and where the second plane has a second distance to the transmitter coil plane. By the transmitter coil plane being defined by the windings of the transmitter coil is meant that the transmitter coil plane intersects with some or all of the windings of the transmitter coil. For example, the transmitter coil may be a planer coil and the transmitter coil plane is a plane that intersects the transmitter coil windings. The second distance may be 1 mm - 40 mm, such as 2 mm - 30 mm, such as 4 mm - 20 mm. The second distance may be a minimum distance between the second plane and the transmitter coil plane defined by the windings of the transmitter coil. The second distance may be substantially zero, i.e. the second plane and the transmitter coil plane defined by the windings of the transmitter coil may be substantially overlapping. In some embodiments, the minimum distance D2 between the second magnetic component and nearest winding of the transmitter coil is in the range 0.5 mm - 5 mm, such as in the range 1 mm - 4 mm, such as 2 mm - 3 mm, i.e. the second magnetic component does not touch the windings of the transmitter coil.

In some embodiments, the second magnetic component is arranged at least partially or entirely behind the transmitter coil with respect to the inductive coupling direction of the transmitter coil. Thus, the second magnetic component may be displaced with respect to the transmitter coil so as to be positioned at least partially or entirely behind the transmitter coil in a direction parallel to the inductive coupling direction of the transmitter coil. The second magnetic component may be placed concentrically within the second volume, i.e. such that there is a common centre for the second magnetic component and the second winding-free area. The second magnetic component may thus be placed co-axially inside the volume defined by the windings of the transmitter coil. The second magnetic component may be a magnet having a magnetic field that is at least partially uniform with respect to an axis extending perpendicularly from the centre of the second winding-free area.

In some embodiments, the charger casing comprises a depression extending into the charger casing and defining a depression volume. By the depression volume being defined by the depression extending into the charger casing is meant that the charger casing partially surrounds the depression volume. In some embodiments, the transmitter coil is arranged such that the depression extends through or at least partially into the second winding-free area.

In some embodiments, a second magnetic component outer boundary, which is an outer boundary of the second magnetic component, is defined in a plane that is substantially parallel to a plane defined by the windings of the transmitter coil, and a second winding-free area outer boundary, which is an outer boundary of the second winding-free area, is defined in a plane that is substantially parallel to a plane defined by the windings of the transmitter coil. The plane defining the second magnetic component outer boundary may be the same plane as the plane defining the second winding-free area outer boundary, or it may be a different plane, which will then be substantially parallel.

In some embodiments, a second winding-free area outer boundary is defined in a plane substantially parallel to a plane defined by the windings of the transmitter coil, and the second winding-free area outer boundary may be substantially circular, oval, elliptical, or regular polygonal in shape.

In some embodiments, a second magnetic component outer boundary is defined in a plane substantially parallel to a plane defined by the windings of the transmitter coil, and the second magnetic component outer boundary is of a shape, which is substantially circular, oval, rectangular, or regular polygonal.

In some embodiments, the second magnetic component outer boundary has a shape that is geometrically similar to that of the second winding-free area outer boundary. For example, the shape of the second magnetic component outer boundary and the shape of the second winding-free area outer boundary may both be substantially e.g. circular, oval, elliptical, or regular polygonal.

In some embodiments, the second magnetic component outer boundary is smaller than the outer boundary of the second winding-free area. In some embodiments, the second magnetic component outer boundary may be a scaled down version of substantially the same shape as that of the second winding-free area outer boundary.

**In the third aspect,** the system comprises a wirelessly rechargeable hearing device according to the first aspect and a charger according to the second aspect. The first and second magnetic components and the induction coils are configured to facilitate placement of the hearing device at or in the charger in such a way that the induction coils are able to couple inductively. The magnetic force between the magnetic components means that there is a self-alignment of the induction coils.

In some embodiments, the first and second magnetic components are configured so as to define a predetermined position for the hearing device at or in the charger in which the receiver coil aligns sufficiently with the transmitter coil to enable wireless charging. The predetermined position may be a plurality of orientations, e.g. due to rotational symmetry, or due to allowable deviations from perfect alignment of the induction coils.

In some embodiments, the receiver coil is smaller than the transmitter coil.

In some embodiments, the extent of the outer physical boundary of the receiver coil is smaller than the outer physical boundary of the transmitter coil. In some embodiments, the extent of the outer physical boundary of the receiver coil within a plane that is substantially parallel to a plane defined by the windings of the receiver coil is smaller than the outer physical boundary of the transmitter coil within a plane that is substantially parallel to a plane defined by the windings of the transmitter coil.

In some embodiments, a receiver coil outer boundary is defined in a plane substantially parallel to a plane defined by the windings of the receiver coil. In some embodiments, a transmitter coil outer boundary is defined in a plane substantially parallel to a plane defined by the windings of the transmitter coil. In some embodiments, the receiver coil outer boundary is smaller than the transmitter coil outer boundary.

In some embodiments, the outer diameter of the receiver coil is smaller than the outer diameter of transmitter coil. The diameter of the receiver coil and of the transmitter coil is the diameter as commonly defined for the type of induction coil used as receiver and/or transmitter coil. An induction coil may have defined both an inner and an outer diameter, but for the purposes of hearing devices, where size is an important factor, it is the outer diameter that is referred to here. The outer diameter may be defined substantially by the outermost span of the windings of the induction coil, while the inner diameter may be defined substantially by the innermost span of the windings of the induction coil. The inner diameter may be substantially the same as an outer diameter of the winding-free area of the induction coil.

In some embodiments, the outer diameter of the receiver coil is between 1 mm and 12 mm, for example between 3 mm and 10 mm, for example between 5 mm and 8 mm, or for example between 6 mm and 7 mm. The smaller the hearing device, the smaller the required maximum form factor of the receiver coil will be and the harshest requirement in current hearing device types will be for hearing devices of the CIC-type, i.e. where the entire functional part of the hearing device is placed within the ear canal with the intent that the hearing device is nearly invisible except for possibly a tiny pull-out wire showing outside of the ear canal.

The larger the two induction coils are, the less significance a deviation from a coaxial alignment has. The size of the receiver coil is to a large degree determined by the available space within the hearing device and may be limited by the constraints of the volume and space within the hearing device, particularly in the smaller types of hearing devices. The transmitter coil, which is positioned in a charger, however, do not usually have the same constraints and the transmitter coil may advantageously have larger dimensions than those of the receiver coil.

In some embodiments, the first magnetic component is arranged such that it is closer to the transmitter coil plane than to the receiver coil plane.

In some embodiments, the first magnetic component outer boundary is smaller than the second winding-free area, and the first magnetic component is arranged at least partially within the second winding-free area when the hearing device is placed at or in the charger. That is, in some embodiments, the hearing device and charger are configured such that the first magnetic component outer boundary is smaller than the second winding-free area, and the first magnetic component is arranged at least partially within the second winding-free area when the hearing device is placed at or in the charger.

In some embodiments, the first magnetic component outer boundary is smaller than the second winding-free area, and the first magnetic component is arranged at least partially behind the transmitter coil with respect to the inductive coupling direction of the transmitter coil when the hearing device is placed at or in the charger. That is, in some embodiments, the hearing device and charger are configured such that the first magnetic component outer boundary is smaller than the second winding-free area, and the first magnetic component is arranged at least partially behind the transmitter coil with respect to the inductive coupling direction of the transmitter coil when the hearing device is placed at or in the charger.

In some embodiments, the hearing device housing comprises a protrusion extending from a part of the hearing device housing and defining a protrusion volume, the charger casing comprises a depression extending into the charger casing and defining a depression volume, and the protrusion is configured to fit inside the depression volume. In some embodiments, the transmitter coil is arranged such that the depression extends through or at least partially into the second winding-free area. In some embodiments, the first magnetic component is arranged at least partially within the protrusion volume.

Thus, the hearing device and the charger may be configured such that the first magnetic component is arranged at least partially within the second winding-free area when the hearing device is placed at or in the charger. The first magnetic component may even be arranged at least partially behind the transmitter coil with respect to the inductive coupling direction of the transmitter coil when the hearing device is placed at or in the charger. In some embodiments, the hearing device and charger are configured such that the first magnetic component is placed co-axially inside the volume defined by the windings of the receiver coil as well as co-axially inside the volume defined by the windings of the transmitter coil when the hearing device is placed at or in the charger.

In some embodiments, the receiver coil and the transmitter coil are configured such that the distance between the centre of mass of the receiver coil and the centre of mass of the transmitter coil is less than or equal to 5.0 mm, such as less than or equal to 4.0 mm, such as less than or equal to 3.0 mm, such as less than or equal to 2.0 mm, when the wirelessly rechargeable hearing device is placed correctly at or in the charger for charging.

Ideally, the receiver and transmitter coils are coaxially aligned, when the hearing device is placed at or in the charger for charging, such that the axial centrelines of the receiver coil and transmitter coil are parallel and aligned. However, a perfect coaxial alignment of the two induction coils is difficult to achieve and not necessary for the charging process.

### BRIEF DESCRIPTION OF THE DRAWINGS

In the following, exemplary embodiments of the invention are described in more detail with reference to the appended drawings, wherein:
FIG. 1 schematically illustrates a wirelessly rechargeable hearing device and a charger for a wirelessly rechargeable hearing device according to some embodiments,
FIG. 2 illustrates an in-ear hearing device positioned within the ear canal of a user,
FIG. 3 illustrates an induction coil according to some embodiments,
FIGS. 4 - 6 and 8 schematically illustrate parts of a wirelessly rechargeable hearing device and a charger for a wirelessly rechargeable hearing device according to some embodiments,
FIG. 7 schematically illustrates a coil and a magnetic component according to some embodiments,
FIG. 9 schematically illustrates a wirelessly rechargeable hearing device 1 and a charger 25 according to some embodiments, and
FIG. 10 schematically illustrates induction coils and magnetic components according to some embodiments.

### DETAILED DESCRIPTION

In the following various exemplary embodiments of the disclosed wirelessly rechargeable hearing device, charger for a wirelessly rechargeable hearing device, and system comprising a wirelessly rechargeable hearing device and a charger for a wirelessly rechargeable hearing device are described with reference to the appended drawings. The skilled person will understand that the accompanying drawings are schematic and simplified for clarity and therefore merely show details which are essential to the understanding of the invention, while other details have been left out. The elements shown in the drawings are not necessarily drawn to scale, but are primarily drawn to illustrate relative position, orientation, and function. Like reference numerals refer to like elements throughout. Like elements will therefore not necessarily be described in detail with respect to each figure.

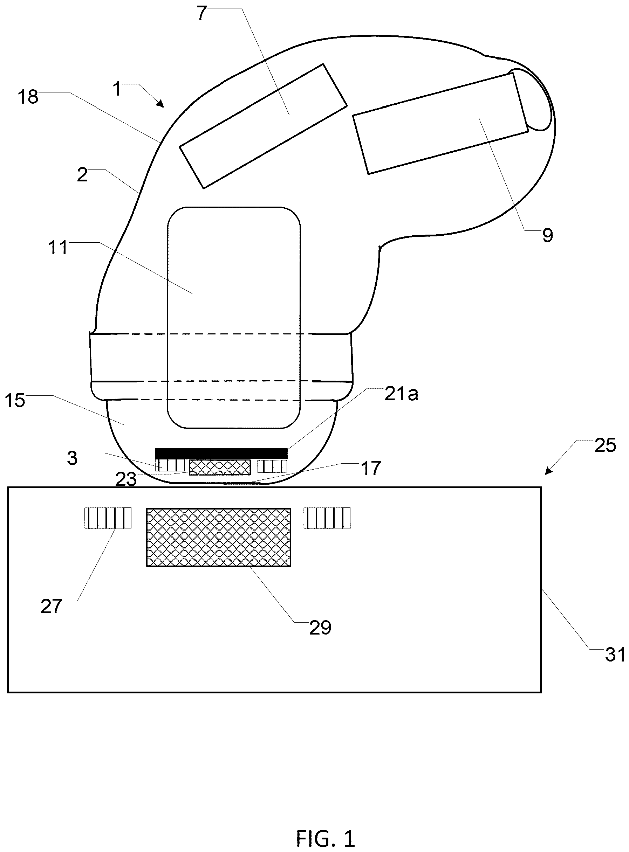

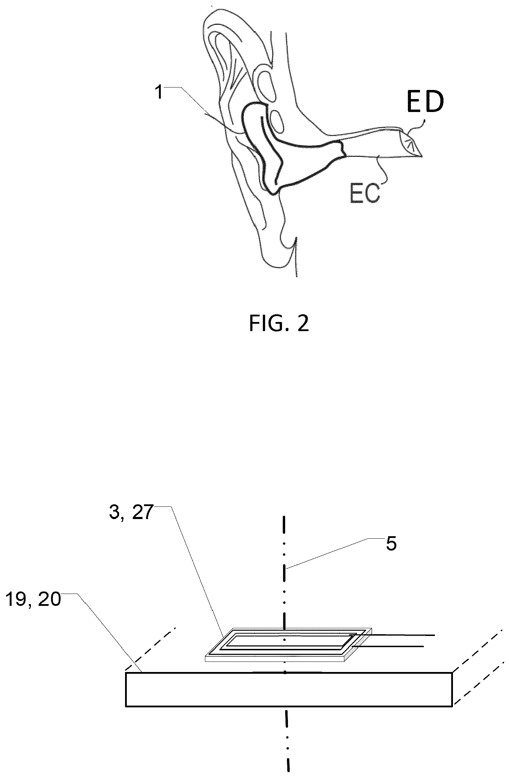

FIG. 1 schematically illustrates a wirelessly rechargeable hearing device 1 and a charger 25 according to some embodiments. The hearing device 1 is an in-ear hearing device, which is made to be positioned at least partly within the ear canal EC of a user, see fig. 2. The hearing device may be a hearing aid and may be one of the in-ear hearing aids known as invisible-in-canal (IIC), completely-in-canal (CIC), in-the-canal (ITC), or in-the-ear (ITE). The drawing illustrates both the outline of the hearing device 1 as well as some of the internal components in a partially transparent side view.

The charger 25 has a charger casing 31, which encases components of the charger such a transmitter coil 27 and a second magnetic component 29, which will be described in the following.

To protect the components within the hearing device 1, the hearing device 1 has a housing 2 intended to help keep out ear wax, dirt, water, oil etc. The hearing device 1 further has a faceplate 15 having a faceplate surface 17. When the in-ear hearing device 1 is in place at least partly within the user's ear canal, at least part of the faceplate surface 17 faces towards the outside of the ear canal, i.e. in a direction generally opposite the eardrum ED, see fig. 2. In some models of in-ear hearing devices 1, the faceplate surface 17 will have one or more microphone openings and possibly buttons, switches, etc. with which the user can interact with the in-ear hearing device 1, for example to change settings and/or turn the in-ear hearing device 1 on/off. The faceplate 15 may be thin or thick when compared to the rest of the hearing device, and it may be formed as an integral part or as a separate part of the in-ear hearing device 1.

The housing 2 is positioned at least partially inside the ear canal of the user, when the in-ear hearing device 1 is in use and at least a part of it is thus shaped to fit inside an ear canal, such as an in-ear part 18. The shape of the in-ear part 18 may be a generic shape that allows the hearing device to be placed within the ear of any user or at least a plurality of users, or the shape may, at least in part, be moulded to fit a particular user better in which case the hearing device is referred to as a custom hearing device. Thus, the shell may be individually shaped to fit inside the ear canal of a particular user. Such an individually shaped in-ear hearing device is known as a custom hearing device and may be made by a process, which entails obtaining a physical or computerized model of part of the particular user's ear canal.

The parts of the housing 2 of an in-ear hearing device, which are adjacent to, or face toward, a part of the user's ear or ear canal, when the in-ear hearing device 1 is in place, will usually not contain microphones, buttons, switches, etc. Such components will instead usually be positioned near or in the faceplate surface 17. If the in-ear hearing device 1 is of a type that is positioned far within the user's ear canal in such a way that it is difficult or near impossible for the user to grab the shell itself for removal, the in-ear hearing device 1 may comprise a means for aiding in the removal of the in-ear hearing device 1, e.g. a pull-out wire.

The in-ear hearing device has hearing device components arranged within the hearing device housing 2, such as a receiver 9, i.e. a speaker, and electronics 7, where the electronics 7 may be electronic components and circuits that create, process, and/or cancel audible sound. The receiver 9 is typically arranged in the proximal end of the in-ear hearing device 1 such that it is close to the eardrum ED of the user when the hearing device 1 is inserted into the user's ear canal EC, see fig. 2.

To supply power to electronic components within the hearing device 1, the hearing device 1 has a rechargeable battery 11, which is charged by inductive charging. To this end, the in-ear hearing device 1 has inductive charging circuitry comprising a flat receiver coil 3, which is shown from the side. The receiver coil 3 may be circular, oval, rectangular or polygonal in shape. The inductive charging circuitry further comprises circuitry for rectifying the alternating current induced in the receiver coil 3 during operation.

The induction coils 3, 27, i.e. the receiver coil 3 and the transmitter coil 27, will be configured to operate at one or more frequency ranges and they may be configured according to a standard of wireless power transfer, such as e.g. the Near Field Communications (NFC) standard, or the Qi standard. An advantage of using induction coils configured according to the NFC standard is that this configuration is better able to handle "noise", such as any noise caused by a static magnetic field created by one or more of the magnetic components 23, 29 ruining the polarization/shielding of the magnetic shielding material. Both the receiver coil 3 and the transmitter coil 27 are positioned close enough to an outer surface of their device so they can get close enough to each other to allow for efficient wireless charging.

An important factor for efficient induction charging is distance between the transmitter and receiver coils. Therefore, the inductions coils are placed such that they can get as close to each other as needed and the charger and hearing device are designed such that the induction coils can align sufficiently for charging. See e.g. Fig. 3, which shows a planar induction coil 3, 27 positioned adjacent to a side 19 of the hearing device housing, or a sidewall 20 of a charger, with its coil axial centreline 5 pointing through the adjacent side/sidewall 19, 20. By being positioned closely adjacent to a side/sidewall 19, 20 the induction coil 3, 27 will be close to the outer surface of the hearing device 1 or charger 25 so that it may get close to the other induction coil 3, 27. The induction coil will often be positioned close to the adjacent side/sidewall 19, 20 with its coil axial centreline 5 at an angle close to 90 degrees with respect to the side/sidewall. Instead of being positioned adjacent to a side/sidewall 19, 20 an induction coil 3, 27 may be placed in an indent in the adjacent side/sidewall or in a through-hole in the adjacent side/sidewall. If placed in a through-hole, the induction coil 3, 27, to protect it from the environment outside the hearing device 1 or charger 25, may have a protective coating and/or be covered by a lacquer.

To facilitate reproducible placement of the hearing device 1 in or at the charger 25 such that the induction coils 3, 27 are aligned sufficiently for induction charging, the hearing device 1 has a first magnetic component 23, which is configured to magnetically engage with a second magnetic component 29 in a charger 25. The second magnetic component 29 in the charger 25 is similarly configured such that it can engage magnetically with the first magnetic component 23 in the hearing device 1 so as to pull at each other to facilitate bringing the induction coils 3, 27 together and maintaining their position for charging. The magnetic force between the first and second magnetic components 23, 29 may have rotational symmetry, e.g. around a coil axial centreline 5 of the induction coils. One of the two magnetic components 23, 29 may be a permanent magnet and the other a magnetic material. In other embodiments, both magnetic components are permanent magnets arranged so as to have opposite magnetic poles pointing towards each other.

The receiver coil 3 has receiver coil windings, which surround an inner, central area with no windings referred to as the first winding-free area. The first magnetic component 23 is positioned at least partly within the first winding-free area. Thus, the first winding-free area and the first magnetic component 23 are configured to allow the placement of the first magnetic component at least partly within the first winding-free area. Similarly, the transmitter coil 27 has transmitter coil windings, which surround an inner, central area with no windings referred to as the second winding-free area. A second magnetic component 29 is positioned at least partly within the second winding-free area. Thus, the second winding-free area and the second magnetic component 23 are configured to allow the placement of the second magnetic component at least partly within the second winding-free area. Advantageously, in this configuration the magnetic force between the first and second magnetic components 23, 29 in the hearing device 1 and in the charger 25 acts to pull the two induction coils together in the direction of induction coupling.

In the embodiment shown in fig. 1, the receiver coil 3 and first magnetic component 23 are positioned in the faceplate 15 adjacent to the faceplate surface 17. Positioning the receiver coil 3 and first magnetic component 23 in or near the faceplate 15 may allow for the same internal architecture of the hearing device 1 to be used between models, types and/or custom hearing devices individualized for different users even though part of the shape of the rest of the shell in the different hearing devices is dissimilar.

The first magnetic component 23 may further be configured such that magnetic engagement with it can be used in extraction of the in-ear hearing device 1 from the ear canal ED of the user, i.e. as a means for aiding in the removal of the in-ear hearing device 1, e.g. instead of using a pull-out wire. As the first magnetic component 23 is positioned in the faceplate 15 and near to the faceplate surface 17, which faces towards the outside of the user's ear canal ED when in position at least partly within the ear canal ED, it could be configured to attract or be attracted to a magnetic component in an extraction device operated by the user and thereby the hearing device 1 could be pulled in the direction out of the user's ear.

The receiver coil 3 may be comprised of a copper layer on a PCB and have a receiver coil magnetic shielding 21a made of a suitable material for magnetic shielding, e.g. ferrite. The receiver coil magnetic shielding 21a acts to concentrate the magnetic field created during induction to the inductive coil instead of wasting energy, e.g. by heating of the surrounding components such as the battery 11.

Further, a magnetic shielding will often be positioned and configured such that the potential adverse effect of the magnetic flux on other components of the hearing device is diminished. A transmitter coil magnetic shielding may similarly be placed in relation to a transmitter coil 27 in a charger 25 for the wirelessly rechargeable hearing device 1. The magnetic shielding 21a, 21b may be further configured to diminish the effects of magnetic components within the hearing device 1 and or the charger 25 such as negative effects on the induction coils 3, 27 and/or the charging field.

A magnetic shielding 21a, 21b is not essential and may therefore be absent or may only be present adjacent to one of the two induction coils 3, 27, i.e. in connection with either the receiver coil 3 or transmitter coil 27. The magnetic shielding 21a, 21b is shown as a solid disc or plate, but may have any functional shape and may not be a solid plate, e.g. it may have holes within it or it may be a latticework. The skilled person will know that the magnetic shielding 21a, 21b may have a different geometry than that shown to achieve its intended functionality.

The hearing device 1 and/or charger 25 may provide the user with a visual and/or audible signal to alert and/or inform the user, e.g. when the induction coils 3, 27 are in position for charging, commencing or halting charging, status of charging, etc. For example, one or more LEDs on the charger 25 and/or on the hearing device 1 may light up to indicate charging and possibly how much the hearing device 1 has been recharged.

FIG. 2 shows a user's ear as well as parts of the inner ear, and illustrates an in-ear hearing device 1 positioned within the ear canal, EC. When the in-ear hearing device 1 is in place within the user's ear canal EC, its receiver, which is typically arranged in the proximal end of the in-ear hearing device 1, is close to the eardrum ED.

FIG. 3 illustrates an induction coil, such as a receiver coil 3 or a transmitter coil 27, positioned adjacent to a hearing device side 19 or a sidewall 20 of a charger. The induction coil 3, 27 is a flat, rectangular coil and has a coil axial centreline 5, which extends through the centre of the induction coil and along its magnetic axis.

An induction coil has a coil axial centreline 5, which will often be both the magnetic and geometric centre of the induction coil(s), and wireless charging is most efficient when the coil axial centrelines of the transmitter and receiver coils are aligned. In practice, there will be some degree of misalignment between the two induction coils, and the greater the misalignment, the less efficient the charging.

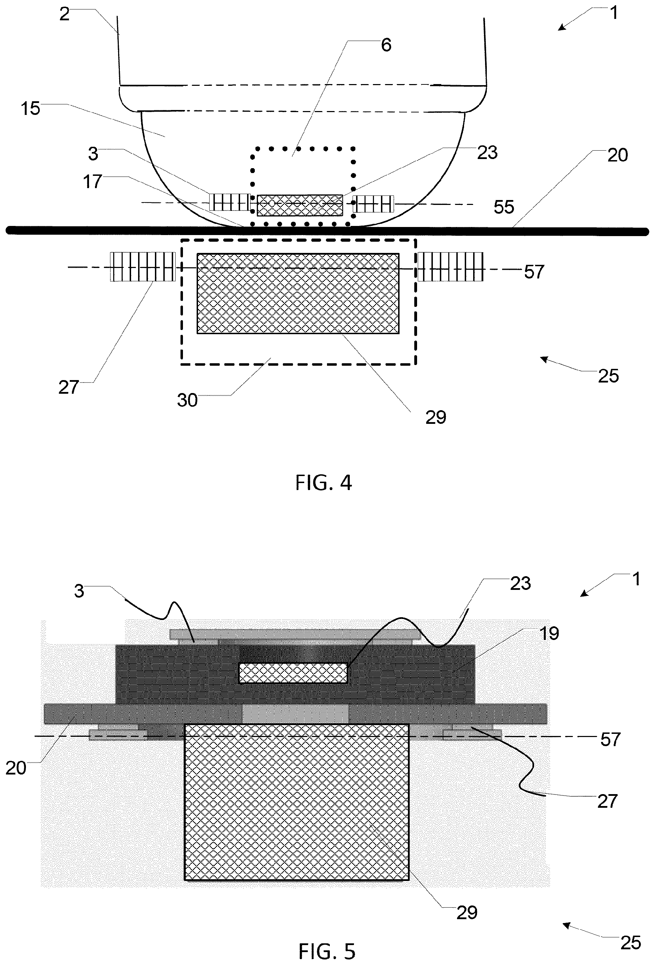

FIGS. 4 - 6 and 8 schematically illustrate parts of a wirelessly rechargeable hearing device 1 and a charger 25 for a wirelessly rechargeable hearing device according to some embodiments. The figures shows an expanded view of parts of a wirelessly rechargeable hearing device 1 and charger 25 for a wirelessly rechargeable hearing device. Each figure illustrates an arrangement of induction coils and magnetic components according to some embodiments.

The hearing device 1 comprises a housing 2, and inductive charging circuitry arranged within the housing. The inductive charging circuitry comprises a planar receiver coil 3. A first magnetic component 23 is positioned relative to the receiver coil 3 and configured to magnetically engage with a second magnetic component positioned outside the hearing device. The charger 25 has a charger casing 31 and comprises a planar transmitter coil 27 arranged within the charger casing 31. The second magnetic component 29 is positioned relative to the transmitter coil 27 and configured to magnetically engage with the first magnetic component. The second magnetic component 29 in the charger 25 is configured to magnetically engage with the first magnetic component 23 in the hearing device 1 such that the two components attract each other. The first and second magnetic components are further configured to facilitate inductive coupling between the receiver coil 3 and the transmitter coil 27 thus facilitating the charging process.

The magnetic force between the first and second magnetic components 23, 29 may have rotational symmetry, e.g. around a coil axial centreline 5 of the induction coils. One of the two magnetic components 23, 29 may be a permanent magnet and the other a magnetic material. In other embodiments, both magnetic components are permanent magnets arranged so as to have opposite magnetic poles pointing towards each other. If the magnetic engagement between the first and second magnetic components 23, 29 allows the hearing device 1 to be positioned in the charger 25 in multiple ways the hearing device 1 and charger 25 may have one or more indicators to further aid the user in reproducibly placing the hearing device 1 correctly in the charger 25.

The induction coils 3, 27, i.e. the receiver coil 3 and the transmitter coil 27, will be configured to operate at one or more frequency ranges and they may be configured according to a standard of wireless power transfer, such as e.g. the Near Field Communications (NFC) standard, or the Qi standard. Both the receiver coil 3 and the transmitter coil 27 are positioned close enough to an outer surface of the device so they can get close enough to each other to allow for efficient wireless charging when the hearing device is placed at or in the charger.

The receiver coil 3 of the hearing device 1 comprises a plurality of receiver coil windings surrounding a first winding-free area. Extending perpendicularly from the first winding-free area is a first volume 6 exemplified by a dotted outline. As the first volume 6 extends from an area of the receiver coil within the coil windings, the extent of the first volume in two dimensions is ultimately bounded by the coil windings, whereas the third dimension is in principal unbounded. However, the first volume 6 is used primarily to define a relative positioning of the first magnetic component w.r.t. the receiver coil and the possible absolute position of the first magnetic component will further depend on physical boundaries. Similarly, the transmitter coil 27 of the charger 25 for a hearing device comprises a plurality of transmitter coil windings surrounding a second winding-free area. Extending perpendicularly from the second winding-free area is a second volume 30 exemplified by a dashed outline.

The hearing device 1 and/or charger 25 may provide the user with a visual and/or audible signal to alert and/or inform the user, e.g. when the induction coils 3, 27 are in position for charging, commencing or halting charging, status of charging, etc. For example, one or more LEDs on the charger 25 and/or on the hearing device 1 may light up to indicate charging and possibly how much the hearing device 1 has been recharged.

In FIG. 4 the receiver coil 3 is arranged in the faceplate 15 of the hearing device 1 and adjacent to the faceplate surface 17. The first magnetic component 23 has a rectangular shape in the view that is cut perpendicular to the planes of the planar induction coils 3, 27, and the first magnetic component 23 may e.g. be shaped as a disc, such as a round or oval disc, or a plate, such as a rectangular plate. The first magnetic component 23 is arranged within the first volume 6 and substantially in the plane 55 of the planar receiver coil, where the plane is marked with a dash-long dash-dash line. Thus, the first magnetic component is also arranged adjacent to the faceplate surface 17.

The transmitter coil 27 is arranged in the charger 25 and adjacent to a sidewall 20 of the charger. The second magnetic component 29 also has a rectangular shape in the view that is cut perpendicular to the plane of the planar induction coils 3, 27, and the second magnetic component 23 may e.g. be shaped as a disc, such as a round or oval disc, or a plate, such as a rectangular plate. The second magnetic component 29 is arranged within the second volume 30 and partially in the plane 57 of the planar transmitter coil, where the plane is marked with a dash-long dash-dash line. Thus, the second magnetic component is also arranged adjacent to the sidewall 20 of the charger.

The first and second magnetic component 23, 29 will magnetically engage and, because of their position within the first and second volume 6, 30, respectfully, thereby act to position the induction coils 3, 27 for inductive charging.

In FIG. 5 the receiver coil 3 is arranged in the hearing device 1 and adjacent to a side 19 of the hearing device. The first magnetic component 23 has a rectangular shape in the view that is cut perpendicular to the planes of the planar induction coils 3, 27, and the first magnetic component 23 may be shaped as e.g. a disc, such as a round or oval disc, or a plate, such as a rectangular plate. The first magnetic component 23 is arranged in an indent in an adjacent side 19 of the hearing device, in front of the receiver coil 3 with respect to the coupling direction of the receiver coil, and within the first volume 6. The first magnetic component 23 is arranged in-between the receiver coil 3 and the adjacent outer surface of the hearing device housing.

The transmitter coil 27 is arranged in the charger 25 and adjacent to a sidewall 20 of the charger. The second magnetic component 29 also has a rectangular shape in the view that is cut perpendicular to the plane of the planar induction coils 3, 27, and the second magnetic component 23 may be shaped e.g. as a disc, such as a round or oval disc, or a plate, such as a rectangular plate. The second magnetic component 29 is arranged partially in the plane 57 of the planar transmitter coil marked with a long dash-dash line and within the second volume 30. Thus, the second magnetic component is also arranged adjacent to the sidewall 20 of the charger.

The first and second magnetic component 23, 29 will magnetically engage and, because of their position within the first and second volume 6, 30, respectfully, thereby act to position the induction coils 3, 27 for inductive charging.

By having the first magnetic component arranged in front of the receiver coil 3 and in an indent of the adjacent side 19 of the hearing device, the first magnetic component is close to the second magnetic component in the charger, and potentially closer than e.g. the configuration of fig. 4. Further, by placing the first magnetic component at some distance from the receiver coil 3, the effect of the magnetic field close to the first magnetic component on the smaller receiver coil may be reduced.

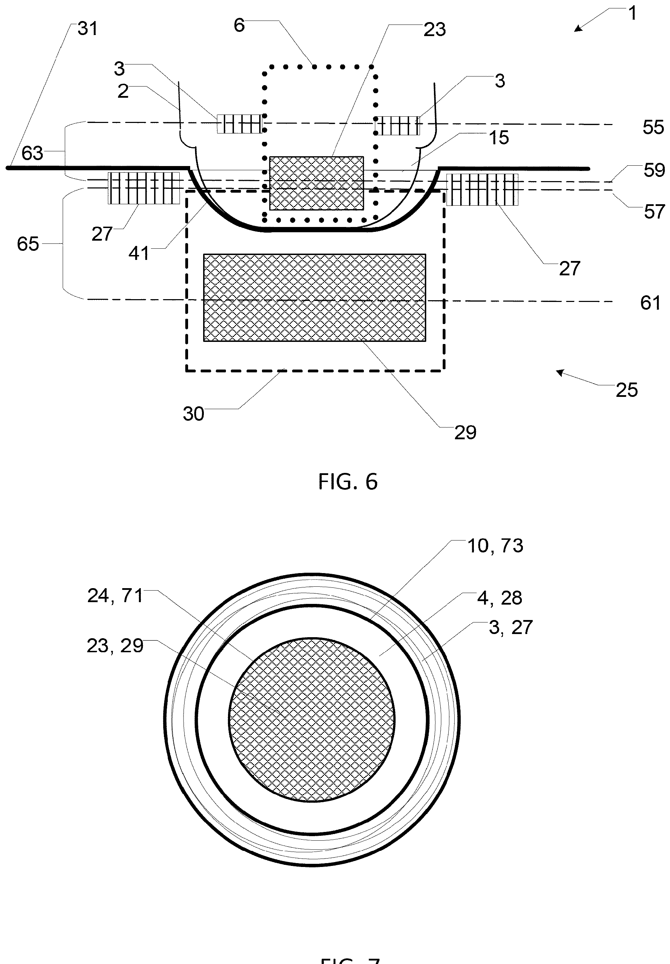

In FIG. 6 the receiver coil 3 is arranged in the faceplate 15 of the hearing device 1 and adjacent to the faceplate surface 17. The first magnetic component 23 has a rectangular shape in the view that is cut perpendicular to the planes of the planar induction coils 3, 27, and the first magnetic component 23 may be shaped as e.g. a disc, such as a round or oval disc, or a plate, such as a rectangular plate. The first magnetic component 23 is arranged in front of the receiver coil 3 with respect to the coupling direction of the receiver coil, and within the first volume 6. The first magnetic component 23 is arranged in-between the receiver coil 3 and the faceplate surface 17 and in a first plane 59 that is substantially parallel to the plane 55 defined by the windings of the receiver coil.

The charger casing 31 has an indentation 41, which is shaped to allow at least part of the faceplate 15 to fit within the indent 41, when the hearing device 1 is placed in the charger 25. The transmitter coil 27 is arranged in the charger 25 adjacent to a sidewall of the charger and such that the charger casing indent 41 at least partially extends into the winding-free area of the transmitter coil 27 thus allowing the first magnetic component 23 of the hearing device to be positioned at least partially within the winding-free area of the transmitter coil when the hearing device is placed at or in the charger.

The second magnetic component 29 also has a rectangular shape in the view that is cut perpendicular to the plane of the planar induction coils 3, 27, and the second magnetic component 23 may e.g. be shaped as a disc, such as a round or oval disc, or a plate, such as a rectangular plate. The second magnetic component 29 is arranged behind the transmitter coil 27 with respect to the coupling direction of the transmitter coil, and within the second volume 30. Further, the second magnetic component 29 is arranged in a second plane 61 that is parallel to the transmitter coil plane 57 defined by the windings of the transmitter coil, and the second magnetic component 29 is arranged adjacent to a sidewall of the charger casing indentation 41.

The first plane 59 has a first distance 63 to the receiver coil plane 55, and the second plane 61 has a second distance 65 to the transmitter coil plane 57.

An outer boundary 24 of the first magnetic component 23 is defined in the first plane 59, see fig. 7, and is smaller than the second winding-free area 28 allowing for the first magnetic component 23 to be arranged within the second winding-free area when the hearing device is placed at or in the charger. The first magnetic component may even extend so far as to be arranged at least partially behind the transmitter coil 27 with respect to the inductive coupling direction of the transmitter coil when the hearing device is placed at or in the charger.

The first and second magnetic component 23, 29 are configured to engage magnetically when the hearing device is placed in the charger and, because of their position within the first and second volume 6, 30, respectfully, act to position the induction coils 3, 27 for inductive charging.

By having the first magnetic component arranged in front of the receiver coil 3 and within the winding-free area of the transmitter coil, the first magnetic component is advantageously close to the second magnetic component in the charger. Further, by placing the first magnetic component at some distance from the receiver coil 3, the effect on the receiver coil of the magnetic field around the first magnetic component may be reduced.

FIG. 7 schematically illustrates an induction coil and a magnetic component according to some embodiments.

The induction coil is a planar coil, and it and the magnetic component are viewed along a normal to a plane that is defined by the coil's windings. The induction coil, which may be a receiver coil 3 or a transmitter coil 27, has a plurality of windings and is a circular, planar coil. The coil windings surround an inner area with no coil windings, the area being referred to as the winding-free area 4, 28. The outer boundary 10, 73 of the winding-free area is given by the innermost winding and is circular.

Within the winding-free area 4, 28 is a magnetic component 23, 29 having an outer boundary 24, 71 in a plane that is parallel to the plane defined by the coil's windings. The outer boundary of the magnetic component is circular and the overall shape of the magnetic component may be a sphere, a disc, etc. Thus, the shape of the magnetic component outer boundary 24, 71 is geometrically similar to that of the winding-free area outer boundary 10, 73, but scaled down.

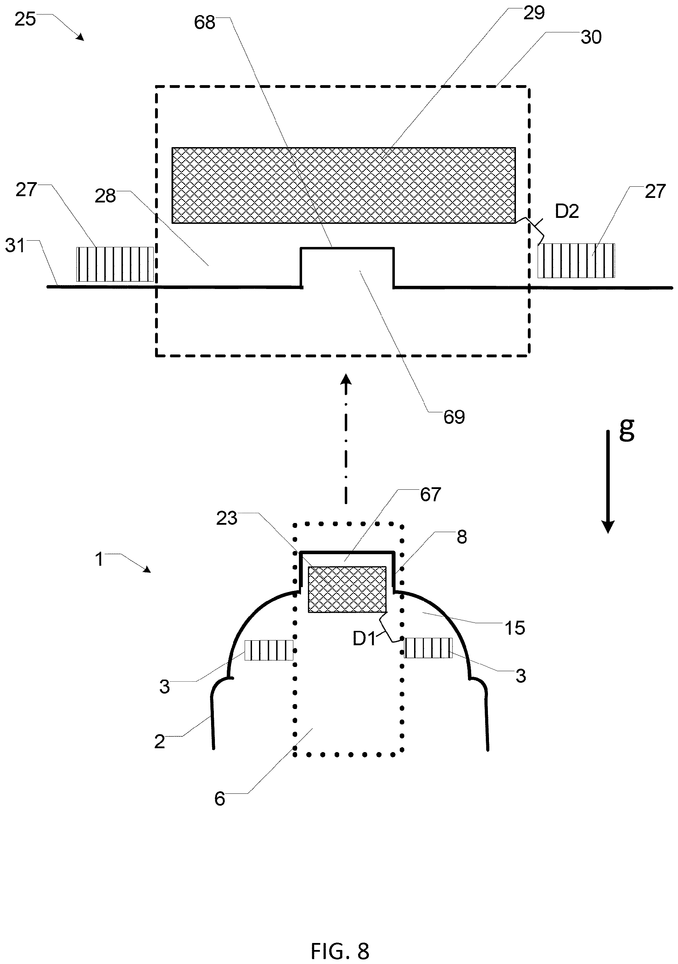

In FIG. 8 the charger casing 31 has a depression 68 extending into a surface of the charger casing 31 and defining a depression volume 69. Conversely, the hearing device housing 2 has a protrusion 8 extending from a part of the hearing device housing and defining a protrusion volume 67. The protrusion 8 and the depression 68 are configured such that the protrusion 8 will fit inside the depression 68, when the hearing device is placed at or in the charger 25. The protrusion 8 is shown as extending from the faceplate 15 of the hearing device, but in some embodiments the protrusion may extend from another part of the hearing device housing. A dash-dot-dash line indicates a direction in which the hearing device can be placed at or in the charger such that the protrusion is inserted in the depression.

The transmitter coil 27 is arranged at or in the charger 25 adjacent to a sidewall of the charger and arranged such that the depression volume 69 extends into or through the winding-free area 28 of the transmitter coil. The second magnetic component 29 has a rectangular shape in the view that is cut perpendicular to the plane of the planar induction coils 3, 27, and the second magnetic component 23 may be shaped e.g. as a disc, such as a round or oval disc, or a plate, such as a rectangular plate. The second magnetic component 29 is positioned at or in the charger 25 and within the second volume 30 with a minimum distance D2 to the nearest winding of the transmitter coil 27.

The first magnetic component 23 has a rectangular shape in the view that is cut perpendicular to the planes of the planar induction coils 3, 27, and the first magnetic component 23 may e.g. be shaped as a disc, such as a round or oval disc, or a plate, such as a rectangular plate. The first magnetic component 23 is arranged in front of the receiver coil 3, at least partially within the protrusion volume 67 and within the first volume 6 with a minimum distance D1 to the nearest winding of the receiver coil 3. The receiver coil 3 is arranged outside the protrusion volume 67.

Thus, the hearing device 1 and the charger 25 may be configured such that the first magnetic component 23 is arranged at least partially within the second winding-free area 28 when the hearing device is placed at or in the charger. The first magnetic component 23 may even be arranged at least partially behind the transmitter coil 27 with respect to the inductive coupling direction of the transmitter coil when the hearing device is placed at or in the charger. In some embodiments, the hearing device and charger are configured such that the first magnetic component is placed co-axially inside the volume defined by the windings of the receiver coil as well as co-axially inside the volume defined by the windings of the transmitter coil when the hearing device is placed at or in the charger.

The first and second magnetic component 23, 29 are configured to engage magnetically when the hearing device is placed at or in the charger and, because of their position within the first and second volume 6, 30, respectfully, act to position the induction coils 3, 27 for inductive charging.

By having the first magnetic component arranged in front of the receiver coil 3 and within the winding-free area of the transmitter coil, the first magnetic component is advantageously close to the second magnetic component in the charger. Further, by placing the first magnetic component at some distance from the receiver coil 3, the effect of the magnetic field close to the first magnetic component on the smaller receiver coil may be reduced.

The magnetic components and the physical features of the protrusion and depression creates an interlock mechanism, which aids the user in placing the hearing device at or in the charger and maintains the hearing device at or in the charger. In addition, the magnetic force between the magnetic components means that there is a self-alignment of the induction coils.

The magnetic force between the first and second magnetic components 23, 29 may be strong enough to hold the hearing device 1 against gravity (arrow marked g), e.g. such that the hearing device 1 "hangs" at or in the charger 25. This may also be the case for any of the hearing device and charger configurations shown in the other figures. Thus, the charger 25 may be constructed as an "open construction" without, or with few, mechanical fastenings. An advantage of this type of "open" construction charger, which is minimally shaped to the shape of a hearing device 1, is that it can more easily be designed to be used with a plurality of hearing devices of different types.

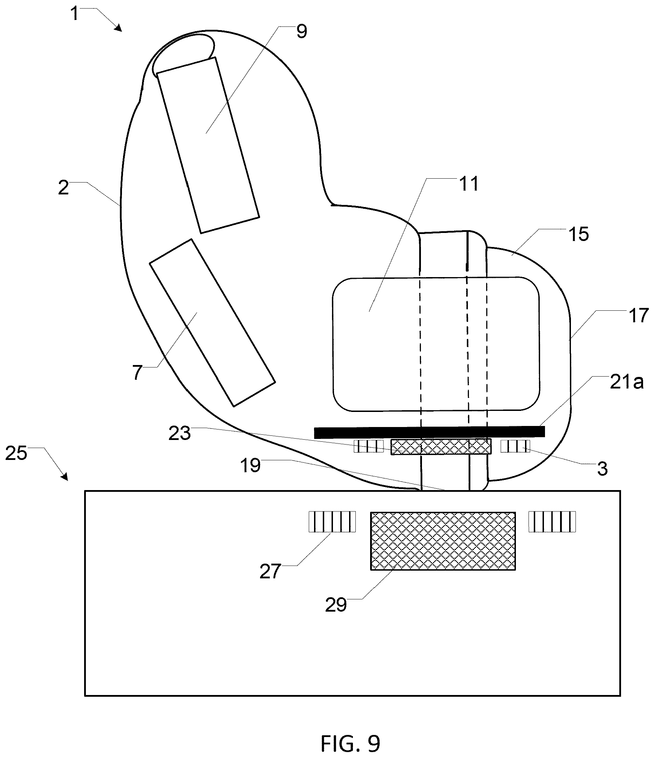

FIG. 9 schematically illustrates a wirelessly rechargeable hearing device 1 and a charger 25 according to some embodiments. The hearing device 1 and charger 25 are similar to the hearing device 1 and a charger 25 shown in FIG. 1 and for the most part only those features that separate the embodiments of FIG. 1 and 9 are mentioned in the following.

The receiver coil 3 is arranged in the hearing device 1 and adjacent to a side 19 of the hearing device, which is not the faceplate surface 17. The battery 11 may be a button cell battery with its side, i.e. not terminals, positioned partially in the faceplate 15 and towards the faceplate surface 17. The receiver coil 3 is placed adjacent to a terminal of the rechargeable battery 11 with the windings of the receiver coil being substantially parallel to the terminal of the battery 11.

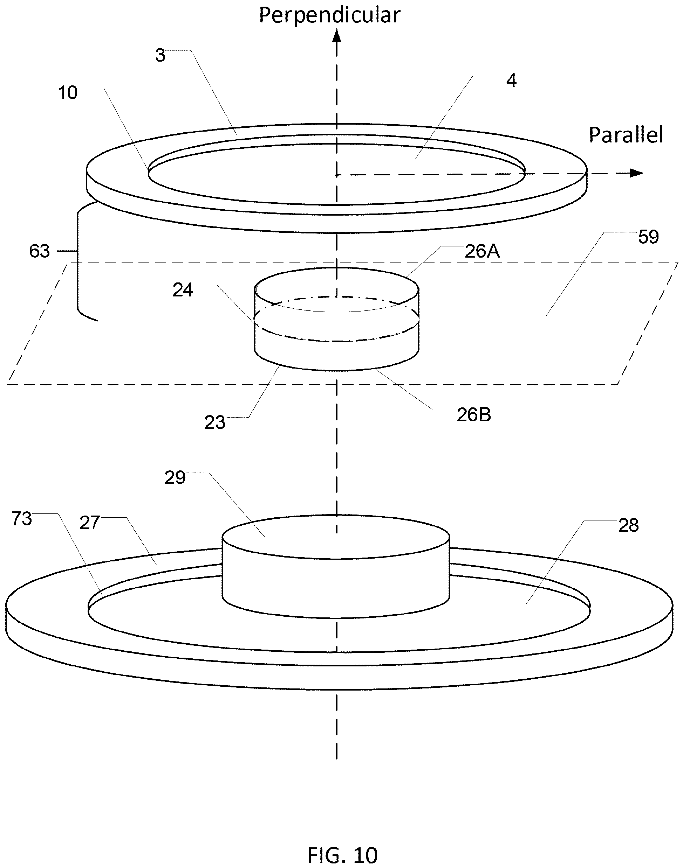

FIG. 10 schematically illustrates induction coils and a magnetic components according to some embodiments. The induction coils 3, 27 are planar, circular coils having a plurality of windings. The coil windings surround an inner area with no coil windings, the area being referred to as the winding-free area 4, 28. The outer boundary 10, 73 of the winding-free area is given by the innermost winding and is circular.

In-between the receiver coil 3 and the transmitter coil 27 is positioned a first magnetic component 23 and a second magnetic component 29.

The first magnetic component is arranged in a first plane 59 that is substantially parallel to the plane defined by the windings of the receiver coil.

The first magnetic component 23 has an outer boundary 24 in the first plane 59. The overall shape of the first magnetic component is a round disc with its flat sides substantially parallel to the coil windings and the outer boundary of the magnetic component is therefore substantially circular. Thus, the shape of the first magnetic component outer boundary 24 is geometrically similar to that of the winding-free area outer boundary 10, but scaled down in size.

The first magnetic component 23 has a first surface 26B and a second surface 26A opposed and parallel to the first surface, wherein the first surface is arranged to be facing the second magnetic component 29. The first magnetic component 23 is positioned within the first plane 59 such that the distance from the first surface to the first plane is substantially the same as the distance from the second surface to the first plane, where both distances are measured in a direction that is perpendicular to the plane.

Thus, as the distance from the plane to the first and second surfaces are identical, then the magnetic component would be located centrally in the plane so that the distance from the top surface to the plane is the same as the bottom surface to the plane.

Further, the first magnetic component is placed centrally within the first volume, and the second magnetic component is placed centrally within the second volume.

A first volume extends perpendicularly from the first winding-free area and the first magnetic component is arranged within the first volume. The first magnetic component is placed concentrically within the first volume, i.e. such that there is a common centre for the first magnetic component and the first winding-free area. The first magnetic component is thus placed co-axially inside the volume defined by the windings of the receiver coil.

### LIST OF REFERENCES

- 1: Wirelessly rechargeable hearing device
- 2: Housing
- 3: Receiver coil
- 4: First winding-free area
- 5: Induction coil axial centreline
- 6: First volume
- 7: Hearing device electronics
- 8: Protrusion
- 9: Receiver
- 10: Outer boundary of first winding-free area
- 11: Rechargeable battery
- 15: Faceplate
- 17: Faceplate surface
- 18: In-ear part of housing
- 19: Side of hearing device
- 20: Charger sidewall
- 21a: Receiver coil magnetic shielding
- 21b: Transmitter coil magnetic shielding
- 23: First magnetic component
- 24: Outer boundary of first magnetic component
- 25: Charger
- 26A: First surface of first magnetic component
- 26A: Second surface of first magnetic component
- 27: Transmitter coil
- 28: Second winding-free area
- 29: Second magnetic component
- 30: Second volume
- 31: Charger casing
- 41: Indentation in charger casing
- 55: Receiver coil plane
- 57: Transmitter coil plane
- 59: First plane
- 61: Second plane
- 63: First distance
- 65: Second distance
- 67: Protrusion volume
- 68: Depression
- 69: Depression volume
- 71: Outer boundary of second magnetic component
- 73: Outer boundary of second winding-free area
- EC: Ear canal
- ED: Eardrum
- D1: Minimum distance between the first magnetic component and nearest winding of the receiver coil
- D2: Minimum distance between the second magnetic component and nearest winding of the transmitter coil

## Claims

1. **A wirelessly rechargeable hearing device (1)** configured to be worn at an ear of a user, the hearing device (1) comprising:
- a hearing device housing (2),
- a rechargeable battery (11) arranged within the hearing device housing (2), and
- inductive charging circuitry comprising a receiver coil (3) configured for inductive coupling to a transmitter coil positioned outside the hearing device, the receiver coil comprising a plurality of receiver coil windings surrounding a first winding-free area (4), the inductive charging circuitry being arranged within the hearing device housing (2),
wherein the hearing device (1) further comprises a first magnetic component (23) configured to magnetically engage with a second magnetic component (29) positioned outside the hearing device, the first magnetic component being arranged within the hearing device housing,
the first magnetic component (23) being further arranged within a first volume (6), wherein the first volume extends perpendicularly from the first winding-free area.

2. A wirelessly rechargeable hearing device (1) according to claim 1, wherein the first magnetic component (23) is further arranged substantially in a first plane (59) that is substantially parallel to a receiver coil plane (55) defined by the windings of the receiver coil, and where the first plane has a first distance (63) to the receiver coil plane.

3. A wirelessly rechargeable hearing device (1) according to any of the previous claims, wherein the first magnetic component is further arranged at least partially or entirely in front of the receiver coil with respect to the inductive coupling direction of the receiver coil.

4. A wirelessly rechargeable hearing device (1) according to claim 3, wherein the hearing device housing (2) comprises a protrusion (8) extending from a part of the hearing device housing and defining a protrusion volume (67), and wherein the first magnetic component is arranged at least partially within the protrusion volume.

5. A wirelessly rechargeable hearing device (1) according to claim 4, wherein the receiver coil (3) is arranged outside the protrusion volume.

6. A wirelessly rechargeable hearing device (1) according to any of the previous claims, wherein a first magnetic component outer boundary (24) is defined in a plane substantially parallel to a plane defined by the windings of the receiver coil, and
a first winding-free area outer boundary (10) is defined in a plane substantially parallel to a plane defined by the windings of the receiver coil, and
wherein the first magnetic component outer boundary (24) has a shape that is geometrically similar to that of the first winding-free area outer boundary (10).

7. A wirelessly rechargeable hearing device according to claim 1, wherein the first magnetic component (23) is a magnetic material, or a permanent magnet.

8. **A charger** (25) for a wirelessly rechargeable hearing device (1), the charger (25) comprising:
- a charger casing (31), and
- a transmitter coil (27) configured for inductive coupling to a receiver coil positioned outside the charger (25), the transmitter coil comprising a plurality of transmitter coil windings surrounding a second winding-free area (28), the transmitter coil being arranged within the charger casing (31),
wherein the charger (25) further comprises a second magnetic component (29) configured to magnetically engage with a first magnetic component (23) positioned outside the charger,
the second magnetic component (29) being arranged within a second volume (30), wherein the second volume extends perpendicularly from the second winding-free area.

9. A charger (25) according to claim 8, wherein the second magnetic component is further arranged substantially in a second plane (61) that is substantially parallel to a transmitter coil plane (57) defined by the windings of the transmitter coil, and where the second plane has a second distance (65) to the transmitter coil plane.

10. A charger (25) according to any of claims 8-9, wherein the second magnetic component is further arranged at least partially or entirely behind the transmitter coil with respect to the inductive coupling direction of the transmitter coil.

11. A charger (25) according to claim 10, wherein the charger casing (31) comprises a depression (68) extending into the charger casing and defining a depression volume (69), and wherein the transmitter coil is arranged such that the depression volume (69) extends at least partially into the second winding-free area (28).

12. A charger (25) according to any of claims 8-11, wherein a second magnetic component outer boundary (71) is defined in a plane substantially parallel to a plane defined by the windings of the transmitter coil, and
a second winding-free area outer boundary (73) is defined in a plane substantially parallel to a plane defined by the windings of the transmitter coil, and
wherein the second magnetic component outer boundary (71) has a shape that is geometrically similar to that of the second winding-free area outer boundary (73).

13. A charger according to any of claims 8-12, wherein the second magnetic component (29) is a magnetic material, or a magnet.

14. **A system** comprising a wirelessly rechargeable hearing device (1) and a charger (25), wherein the wirelessly rechargeable hearing device (1) is a hearing device (1) according to any of claims 1 - 7, and the charger (25) is a charger according to any of claims 8-13.

15. A system according to claim 14, wherein the first magnetic component outer boundary (24) is smaller than the second winding-free area (28), and wherein the first magnetic component (23) is arranged at least partially within the second winding-free area (28) when the hearing device is placed in the charger, and/or wherein the first magnetic component (23) is arranged at least partially behind the transmitter coil (27) with respect to the inductive coupling direction of the transmitter coil when the hearing device is placed in the charger.
